# EUROPEAN PATENT APPLICATION

(11) **EP 4 105 012 A1**
(43) Date of publication of application: **21.12.2022**
(21) Application number: 22000164.8
(22) Date of filing: 17.06.2022
(51) Int. Cl.: B32B 3/30, B32B 7/12, B32B 9/00, B32B 9/04, B32B 15/082, B32B 15/09, B32B 17/06, B32B 17/10, B32B 27/30, B32B 27/36

(54) **DECORATIVE PANEL ASSEMBLIES**

(30) Priority: 18.06.2021 US 202117351545
(71) Applicant: Gemtron Corporation, Sweetwater, TN 37874 (US)
(72) Inventor: ADAMS, Brian, Vincennes, IN 47591 (US)
(74) Representative: Himmelsbach, Mathias

(57) **Abstract**

The present disclosure provides a layered assembly. The assembly has a support layer that has a textured surface. A decorative layer is applied to the textured surface. The layered assembly can therefore exhibit many different visual appearances depending on the texturing that is created on the support layer and imparted to the decorative layer. The present disclosure also provides methods of making the layered assembly, and appliances that use the layered assembly.

## Description

The present disclosure relates to layered decorative assemblies that include materials such as glass, metal and plastic. In particular, the present disclosure relates to layered decorative assemblies that can mimic the visual appearance of a material without using that particular material in the layered assembly.

In home appliances, such as dishwashers, ovens, or refrigerators, it is often desirable to have surfaces that have a desirable visual appearance such as that of brushed stainless steel for example, but a drawback with using actual brushed stainless steel is that it can scratch easily. The same is true of other materials such as wood and leather, although they are not often used for appliance surfaces.

The present disclosure provides layered assemblies that comprise a support layer with at least one textured surface, and a decorative layer. The texture of the textured surface is created so that when the decorative layer is applied to the textured surface, the shaping of the textured surface is imparted to the decorative layer as the decorative layer conforms to the textured surface. Depending on the materials that are used in the layered assembly and the texturing that is imparted to the decorative layer, the layered assembly can exhibit many different visual appearances. Thus, the layered assemblies of the present disclosure provide a viewer with a desired cosmetic appearance that mimics the appearance of another material without using that particular material in the layered assembly. In addition, to protect the decorative layer while also providing additional benefits such as scratch resistance and cleanability, the layered assemblies can have a protective layer as the outermost layer.

As described in greater detail below, the assembly can have more than two layers, for example three or four layers. The materials for the layers that are non-metallic can be materials such as glass, glass-ceramic, plastic or plastic polymers (e.g. acrylics), or other materials that provide properties such as strength, transparency, or appearance that may be desired for a particular application. As one example, the layered assembly comprises, in adjacent order, a textured support layer, a decorative layer, an adhesive layer, and a protective layer. The protective layer can be outermost so that the protective layer (e.g. a glass or glass-ceramic layer) can be the external layer that provides improved scratch resistance and improved cleanability compared to actual stainless steel and other materials.

In one embodiment, the present disclosure provides a layered assembly comprising: a support layer comprising a textured surface, wherein the textured surface has a plurality of grooves therein; a decorative layer conformed to the textured surface; a protective layer; and an adhesive layer between the decorative layer and the protective layer. Each of the grooves has a width of at least 40 µm a nd a length of at least 40 µm. The textured surface of the support layer can also have from 1 to 100,000 grooves per mm² of a surface area of the textured surface.

The present disclosure also provides an appliance comprising the layered assembly of the preceding paragraph. The protective layer of the assembly is the outermost layer of the appliance.

In another embodiment, the present disclosure provides a method of manufacturing the above-described layered assembly, comprising the steps of: texturing a surface of the support layer to produce the textured surface; and applying the decorative layer to the textured surface.

In the present disclosure, the term "outermost" refers to a layer, side or the like of the assembly that faces the environment in which the assembly is used, and/or which would be touched by a user. For example, when the assembly is used as the surface of a control panel for an appliance, the outermost side faces the room in which the appliance is placed. The term "innermost" refers to a layer, side or the like of the assembly that faces away from the environment in which the assembly is used, for example that faces into the interior of the appliance. In addition, intermediate layers can be provided between any of the layers of the layered assembly, so when the present disclosure states a layer is applied to another layer or describes the location of two layers, it does not necessarily mean that the layers contact each other unless indicated otherwise.

In the present disclosure, ranges for several features are given. Unless otherwise indicated, the present disclosure contemplates that in addition to any ranges that are explicitly disclosed, any subranges thereof are contemplated as well. As non-limiting examples, a disclosure of 0% to 100% would include a subrange of 20% to 80%, 40% to 60%, 20% to 60%, 40% to 80%, 27% to 71%, and 34% to 59% . A disclosure of 0.1 µm to 10,000 µm includes a subrange of 1,000 µm to 4,000 µm, 10 µm to 100 µm, 100 µm to 4,000 µm, 3,000 µm to 5,000 µm, 134 µm to 1,121 µm, and 26 µm to 111 µm.

Fig. 1a is a top view of a section of a support layer of the present disclosure.

Fig. 1b is a cross-sectional view of the support layer of Fig. 1a, along line B-B.

Fig. 2 is a schematic drawing of an exemplary layered assembly of the present disclosure.

Fig. 3 is a schematic drawing of a process of making the assembly of Fig. 2.

Fig. 4 is a schematic drawing of an appliance having an exemplary layered assembly of the present disclosure as a door.

The assemblies of the disclosure comprise a support layer that has a textured surface. A decorative layer is applied to this support layer and conforms to the textured surface of the support layer. The texturing of the surface of the decorative layer can cause light hitting the surface to scatter, and depending on the texturing and materials used in the layered assembly, the layered assembly can give the appearance of brushed stainless steel, wood, or other materials. This visual appearance may be desirable to users in certain applications, such as on household appliances. The present disclosure also contemplates that each surface of the support layer can be textured, and the decorative layer can be applied to one or both surfaces of the support layer.

The support layer can comprise any material that can impart the dimensions of its textured surface to the decorative layer during assembly. The support layer in some embodiments can be made of plastic, metal, glass, or glass-ceramic. The material for the support layer and the dimensions of its textured surface are selected to provide a desired visual appearance to the layered assembly.

The dimensions of the texturing in the textured surface may vary depending on the desired visual appearance. In some embodiments, this texturing in the textured surface of the support layer is created by forming grooves in the support layer. For example, a wood visual appearance can be achieved by imparting curved or sweeping grooves in the textured surface. A brushed stainless steel appearance can be achieved by imparting an arrangement of short parallel grooves in the textured surface.

The grooves can be formed using a brushing process or any other suitable process such as molding, stamping, extruding, forming, machining and carving. The grooves and the process to form them depends on the desired texturing and visual appearance of the layered assembly. A large variety of a different number, size and patterning of the grooves is possible. These arrangements may vary from assembly to assembly as needed to replicate the visual appearance of another material. The grooves can create 3D patterns in the layered assembly that will cause light to reflect and be perceived by the human eye in a certain manner.

The dimensions of the grooves, and thus the dimensions of the texturing, are selected to form a desired visual appearance. Each individual groove can have a width of at least 40 µm and/or a length of at least 40 µm. These are approximately the minimum dimensions that are needed for perception by the human eye.

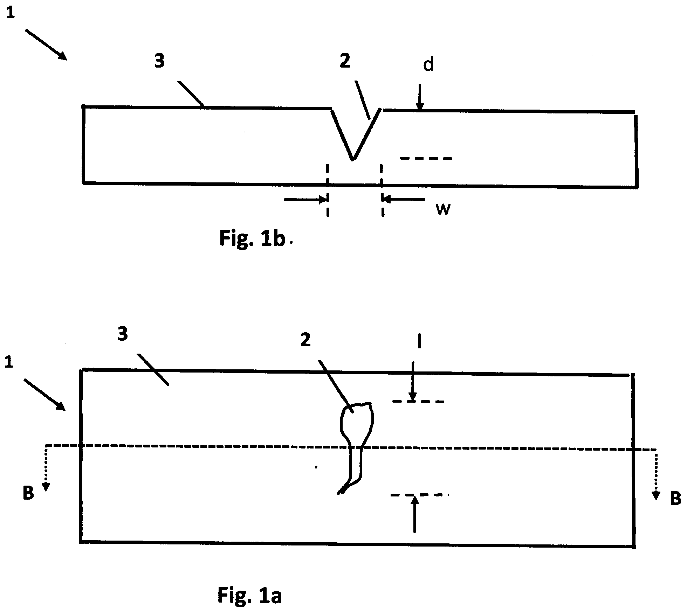

Referring to the Figures, and in particular Figs. 1a and 1b, representations of the above-described grooves are shown. Support layer 1 has a groove 2 in a surface 3 thereof. Surface 3 is thus the textured surface of support layer 1 described herein. Groove 2 can have a length I, a width w, and a depth d.

In some embodiments, the width (w) of the grooves is 40 µm to 5,000 µm, 40 µm to 2,500 um, 40 µm to 1,000 µm or 40 µm to 100 µm and the length (I) of the grooves is 40 µm to 1 meter, 40 µm to 0.1 meters, 40 µm to 0.01 meters, 40 µm to 0.001 meters or 40 µm to 0.0001 meters. Each of the individual grooves can have a depth (d) of greater than 0 to 50 µm, 0 µm to 25 µm, or 0 µm to 10 µm. In the depth direction when viewed in cross-section, the grooves can be v-shaped as shown in Figure 1b, or can have other shapes depending on the process used to form the textured surface. The number of grooves that can be applied to a particular area of the support layer surface can be as high as hundreds of thousands per mm² and can be for example 1 to 100,000 per mm² or 100 to 10,000 per mm², or 100 to 1,000 per mm². A layered assembly that mimics the appearance of brushed stainless steel may have hundreds or thousands of grooves per mm², such as 100 to 10,000 per mm².

The support layer can be completely opaque, completely transparent, or have a transparency therebetween to contribute to the desired visual appearance, to the extent that light will travel through the other layers and reach the support layer. The support layer can have any light transmission percentage from zero (fully opaque) to one hundred (fully transparent), or any subranges therebetween. The support layer can have a smooth surface on the opposite side of the textured surface. The smooth surface may be an innermost surface of the layered assembly and the textured surface may be an outermost surface.

The support layer can be made of plastic which may be easier to texture than harder materials like metal or glass. Suitable plastics include polyethylene terephthalate (the PET or PETE varieties). Other materials, like polycarbonate, that can be used may be more durable or scratch resistant. An acrylic could be used for its beneficial optical properties. The optimal material depends on the intended visual appearance of the layered assembly. Other plastics suitable for use include acrylonitrile butadiene styrene (ABS), phenolics, urea formaldehydes, polyethersulfones, polyacetals, diallyl phthalates, polyetherimides, Teflon^{®}, polyarylethers, polycarbonates, polyphenylene oxides (modified), mineral-reinforced nylons (MRN), polysulfones, and combinations thereof. Plastics that are not known for their "plateability" - i.e., their ability to coated with metals - include polyethylene, polyester and polyvinylchloride (PVC). These low-plateability plastics can be used in the presently disclosed layered assemblies, but modifications may be needed to help the metal adhere. There are some plastics that might only be plated in blended form, such as members of the noryl family such as urethane, xenoy and xylex, as well as nylon polymers such as polypropylene, polyether ethyl ketone (PEEK) and polyphenylene sulfide (PPS). Generally, the higher the chemical resistance of the resin, the more difficult it is to plate.

The support layer can be a glass such as borosilicate, soda lime, or aluminosilicate. It can also be a glass-ceramic. The support layer can be coated and/or functionalized on one or both sides. For example the support layer can be heated glass, lighted glass or electro-chromic glass (switchable glass) or can have a transparent conducting oxide (TCO) layer or layers, a low emissivity layer, a hydrophobic layer, and/or an anti-fog layer. The support layer can also have a tint or colorant therein if desired for a particular application. The support layer can also be a metal. All of the foregoing may contribute to the visual properties of the layered assembly. In some embodiments, the thickness of the support layer is 1 µm to 0.25 inches (approximately 6300 microns), from 1 µm to 1000 µm, from 1 µm to 100 µm, or from 20 to 30 µm.

The decorative layer can be applied to the support layer using any suitable application technique, such as sputtering or deposition. The decorative layer, in particular when the decorative layer is a metal layer, can be applied by a vapor deposition process such as chemical vapor deposition or physical vapor deposition. Other suitable processes such as sputtering (which is sometimes considered a type of physical vapor deposition) and electroplating (sometimes known as a chemical vapor deposition technique) can be used. Arc and flame spraying are also possible. The decorative layer can also be applied as a foil, sheet, paint or dye. The decorative layer can conform to the textured surface in a sense like a coat of paint, in that it does not have a texture itself, but it generally follows and accentuates the surface to which it is applied.

The decorative layer can comprise one or more metals that can be vaporized for application to the support layer. Specific metals include, but are not limited to, copper, chromium, gold, nickel, silver, cadmium, zinc, magnesium, and any combinations thereof. There are some combinations of plastics, metals, and application methods that will work well or optimally together, and others that may be more difficult due to incompatibility of materials. In some embodiments, the thickness of the decorative layer is 0.1 µm to 10000 µm (i.e. 10 mm), from 1 µm to 0.25 inches (i.e. about 6300 µm), from 1 µm to 100 µm, or from 25 µm to 75 µm .

The assembly can also have a protective or third layer, so that the support layer, decorative layer, and third layer are in adjacent, consecutive order in the assembly. The third layer in this embodiment is outermost, and at least partially transparent so that the textured decorative layer shows through, and can be applied to the decorative layer using an adhesive that can conform to the texture of the decorative layer. The third layer can be made of the same materials described above for the support layer.

The layered assembly can also have an adhesive layer. The adhesive layer can be placed between any of the layers in the assembly, for example between the decorative layer and the protective layer, where it bonds the two together. For some applications it is also desired that the adhesive layer includes a tinting material to provide opacity. The opacity can be from zero percent transmission (fully opaque) to full transmission (fully transparent), or any subranges therebetween. This opacity can add to the visual appearance of the layered assembly.

Because of the way the layered assembly can be formed, one or more pressure-sensitive adhesives may be preferred for the adhesive layer. These include acrylic resins, which have good transparency and broad substrate compatibility. Other pressure sensitive adhesives that can be used include natural rubber and synthetic rubber, though these may be too opaque to be suitable depending on the intended visual properties. Another possible adhesive layer is silicon, which has chemical resistance and can be used in high temperature applications. A colorant can be added to the adhesive layer to help the layered assembly take on the tint or color of a desired type of steel, wood, carbon fiber, leather, or any other material. Some colorants may be in the chrome color spectrum, others may be yellowish or copper-colored, and some may be darker, or even black.

The layered assemblies of the present disclosure can include a support layer and a decorative layer only. They can also include the support layer, decorative layer, and protective layer only, or with an optional adhesive layer between the protective layer and the adhesive layer. The layered assemblies of the present disclosure can include four or more layers, or consist of two layers, three layers, or four layers.

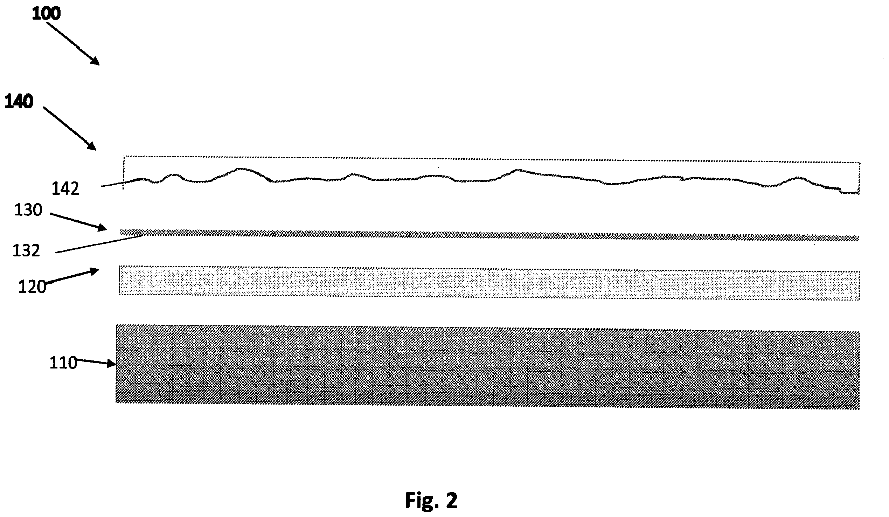

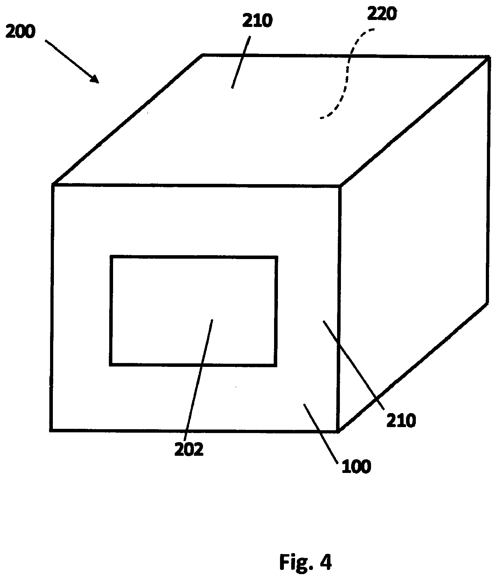

Referring again to the Figures, Fig. 2 shows one example of the layered assembly of the present disclosure. Layered assembly 100 has, in order, outermost glass layer 110 (an embodiment of the protective or third layer described above), adhesive layer 120, metallic layer 130 (an embodiment of the decorative layer described above), and plastic layer 140 (an embodiment of the support layer described above). Layered assembly 100 can have other layers or materials between those layers. Glass layer 110 is the outermost layer when layered assembly 100 is installed as part of the exterior surface of an appliance, such as oven 200 of Fig. 4. Plastic layer 140 has a visibly textured surface 142. Metallic layer 130 can be applied to surface 142 of plastic layer 140 in the manner previously described. The metallic layer 130 and plastic layer 140 can be pressed together or the metallic layer 130 can be deposited on plastic layer 140, so that a textured metallic surface 132 is created. This results in layered assembly 100 having an appearance that mimics the appearance of a desired material (for example, 304 or 430 stainless steel) even though that material is not used. In addition, since glass layer 110 is outermost and protects metallic layer 130, layered assembly 100 can have a smooth outer surface that is easy to clean and more scratch resistant compared to using actual brushed stainless steel.

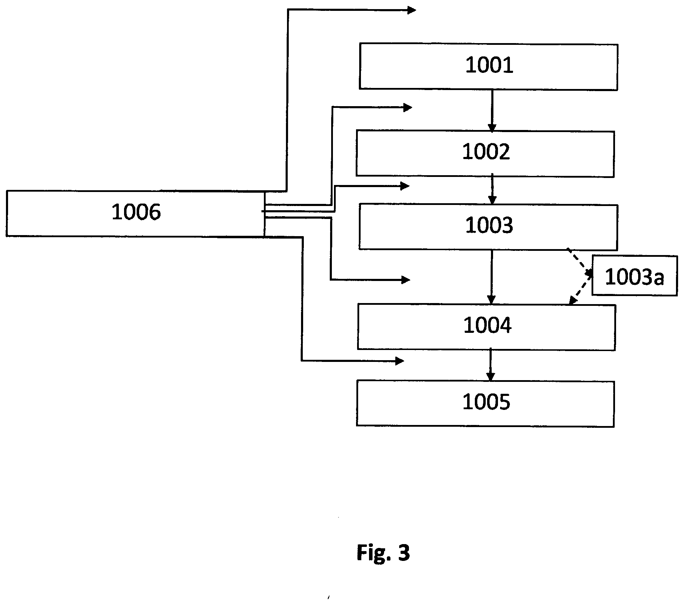

The present disclosure also provides a process 1000 for making layered assembly 100. A schematic of this process 1000 is shown in Fig. 3. The steps of this process do not need to be performed in the order described and other assembly processes can be used.

In step 1001, plastic layer 140 is textured. This can be done in various ways depending on the intended final look. Examples include, but are not limited to, sanding, brushing, scouring, and cutting. In all ways of texturing, the goal is to alter the surface of plastic layer 140. The texturing of plastic layer 140 can also be imparted when the layer is manufactured, for example by incorporating the texturing in a mold, if plastic layer 140 is plastic that is molded or cast, or in the die if the support layer is plastic that is extruded.

In step 1002, metallic layer 130 is applied to support layer 140 on textured surface 142. As previously described, this application can be by one of several methods, for example vapor deposition. In step 1003, adhesive layer 120 is applied to metallic layer 130. The adhesive layer 120 can be poured, sprayed, or rolled on, or laminated. In step 1004, glass layer 110 is then applied to adhesive layer 120. In step 1005, pressure is applied to the glass layer 110 to adhere it to adhesive layer 120.

In the event where glass layer 110 is not applied shortly after adhesive layer 120 is applied in step 1003, a release liner (not shown) can be placed over adhesive layer 120 to protect it until glass layer 110 is applied (step 1003a). The release liner can be, for example, a plastic film or coated paper. The release liner can be applied by standard lamination or a roller application, among other methods. In a step 1006, the adhesive used in adhesive layer 120 can be mixed with one or more colorants to achieve the effects described above. This step 1006 can take place at any time before step 1005. The steps of process 1000 can be adapted as needed to assemblies having only two or three layers, or more than the four layers of layered assembly 100. Further, process 1000 is described with respect to layered assembly 100, but the same steps can be applied to any of the support layers, decorative layers, protective or third layers, and adhesive layers of the present disclosure.

Referring to Fig. 4, a schematic of an appliance is shown, in this case an oven 200 with layered assembly 100 installed. Oven 200 has six outer walls 210 that define an interior space 220, where food product is cooked. Layered assembly 100 can comprise part or all of one or more of walls 210 or part or all of a component such as a control panel attached to a wall. As seen in Fig. 4, layered assembly 100 can also have a window 202 in a center portion thereof. This window 202 can be transparent or translucent, so that a user can see through layered assembly 100. Window 202 could comprise one or more glass or glass-ceramic sheets. Glass layer 110 is the outermost layer of layered assembly 100. It is on the opposite side of layered assembly 100 from interior space 220. Smooth surface 144 of layer 140 faces interior space 220. Layered assembly 100 is shown in an oven in Fig. 4, but it can be used in other appliances or other applications where it may be desired to a certain visual appearance. Further, other assemblies of the present disclosure can be used in oven 200 or other appliances and applications.

While the present disclosure has been described with reference to one or more exemplary embodiments, it will be understood by those skilled in the art that various changes can be made and equivalents can be substituted for elements thereof without departing from the scope of the present disclosure. In addition, many modifications can be made to adapt a particular situation or material to the teachings of the disclosure without departing from the scope thereof. Therefore, it is intended that the present disclosure not be limited to the particular embodiment(s) disclosed as the best mode contemplated, but that the disclosure will include all embodiments falling within the scope of the appended claims.

## Claims

1. A layered assembly comprising:
a support layer comprising a textured surface, wherein the textured surface has a plurality of grooves therein;
a decorative layer conformed to the textured surface;
a protective layer; and
an adhesive layer between the decorative layer and the protective layer,wherein each of the grooves has a width of at least 40 µm and a length of at least 40 µm.

2. The layered assembly of claim 1, wherein the textured surface of the support layer has from 1 to 100,000 grooves per mm² of a surface area of the textured surface in particular from 100 to 1,000 grooves per mm² of a surface area of the textured surface.

3. The layered assembly of claim 1, wherein the decorative layer comprises a metal foil, a sputtered metal layer or a vapor deposited metal layer.

4. The layered assembly of claim 1, wherein the decorative layer comprises a metal selected from the group consisting of copper, chromium, gold, nickel, silver, cadmium, zinc, magnesium, and any combinations thereof.

5. The layered assembly of claim 1, wherein the support layer comprises a material selected from the group consisting of plastic, metal, glass, and glass-ceramic.

6. The layered assembly of claim 1, wherein the support layer comprises a plastic in particular selected from the group consisting of polyethylene terephthalate, acrylic, acrylonitrile butadiene styrene, a phenolic compound, urea formaldehyde, polyethersulfone, polyacetals, diallyl phthalate, polyetherimide, polytetrafluoroethylene, polyarylether, polycarbonate, polyphenylene oxide, mineral-reinforced nylon, and polysulfone, polyethylene, polyester, polyvinylchloride (PVC), a noryl compound, polypropylene, polyether ethyl ketone, polyphenylene sulfide, and any combinations thereof.

7. The layered assembly of claim 1, wherein the protective layer is on an opposite side of the decorative layer from the support layer.

8. The layered assembly of claim 1, comprising, in consecutive adjacent order, the support layer, the decorative layer, the adhesive layer, and the protective layer.

9. The layered assembly of claim 1, wherein the adhesive layer comprises a pressure-sensitive adhesive selected from the group consisting of acrylic resins, natural rubber, synthetic rubber, silicon, and any combinations thereof.

10. The layered assembly of claim 1, wherein the adhesive layer comprises a transparent adhesive or wherein the adhesive layer is tinted.

11. The layered assembly of claim 1, wherein the protective layer comprises a glass or glass-ceramic.

12. An appliance comprising the layered assembly of claim 1, wherein the protective layer is an outermost layer of the appliance.

13. A method of manufacturing the layered assembly of claim 1, comprising the steps of:
texturing a surface of the support layer to produce the textured surface; and
applying the decorative layer to the textured surface.

14. The method of claim 13, wherein the applying of the decorative layer is conducted by vapor deposition.

15. The method of 13, further comprising the steps of applying the adhesive layer to the decorative layer and applying the protective layer to the decorative layer.
